# EUROPEAN PATENT APPLICATION

(11) **EP 1 703 709 A1**
(43) Date of publication of application: **20.09.2006**
(21) Application number: 06005201.6
(22) Date of filing: 14.03.2006
(51) Int. Cl.: H04M 1/725, H04M 1/02

(54) **Portable terminal having replaceable modules**

(30) Priority: 14.03.2005 KR 2005021037
(71) Applicant: Samsung Electronics Co., Ltd., Suwon-si, Gyeonggi-Do (KR)
(72) Inventor: Park, In-Gon, Yeongtong-gu Suwon-si Gyeonggi-do (KR); Lee, Chang-Soo, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a portable terminal having replaceable accessory modules. A user can selectively mount the accessory modules to a body of the portable terminal. The portable terminal includes a body; a plurality of accessory modules selectively mounted on the body, for providing additional functions to the portable terminal; and a locking portion provided to the body and each accessory module, for fixing the accessory to the body.

## Description

The present invention relates to a portable terminal, and more particularly to a portable terminal in which various accessory modules each having a specific function can be selectively mounted to a body of the portable terminal, so that the portable terminal can be used for various purposes.

In general, "a portable terminal" means an electronic device which a user can carry with him/her while communicating wirelessly with another user. In consideration of portability, the design of such a portable terminal has been not only toward compactness, slimness and lightness, but also toward providing multimedia capabilities to allow the user to pursue a wider variety of functions. In particular, future portable terminals will not only be used for many functions while still being compact and light, but will also be modified to be suitable for functioning in a multimedia environment and for providing Internet access and functions.

Conventional portable terminals may be classified into various types according to their appearance, such as bar-type portable terminals, flip-type portable terminals, and folder-type portable terminals. The bar-type portable terminal has a single housing shaped like a bar. The flip-type portable terminal has a flip panel which is pivotably mounted to a bar-shaped housing by a hinge unit. The folder-type portable terminal has a folder coupled to a single bar-shaped housing by a hinge unit in such a manner that the folder can be rotated in order to be folded or unfolded from the housing.

Further, portable terminals may be classified as neck wearable type terminals and wrist wearable type terminals, according to the position at or the way in which a user wears the terminal. The neck wearable type terminal is one which a user wears around the neck using a lanyard or necklace, while the wrist wearable type terminal is one which a user wears around the wrist.

Additionally, portable terminals may be classified as swing or rotation-type terminals and sliding-type terminals according to ways of opening and closing the terminals. In the rotation-type portable terminal, two housings are coupled to each other in a manner that one housing rotates to be opened or closed relative to the other while facing each other. In the sliding-type portable terminal, two housings are coupled to each other in a manner that one housing slides to be opened or closed relative to the other. The various classifications of portable terminals are easily understood by those skilled in the art.

In addition, various portable terminals have been developed to satisfy gradually increasing consumer demands. For example, a portable terminal including camera lens to perform a photography function, a portable terminal having stereo speakers to listen to stereo music, a portable terminal having a TV receiver, and a portable terminal having a game function have been manufactured.

Since the conventional portable terminals as above mentioned have a specific structure to accommodate their respective uses, there is a problem in that it is impossible, or at least, inconvenient to use them for other purposes except for their main use. Where the portable terminal having the specific function of playing music is used to play a game, for example, the game is played by using the common keys provided on the dial pad. Thus, it causes game play to be difficult, resulting in reduced enjoyment by the user. Therefore, there is a disadvantage in that the conventional portable terminal must be replaced with a portable terminal having reinforced game function to smoothly play games.

Accordingly, the present invention has been made to solve the above-mentioned problems occurring in the prior art.

It is the object of the present invention to provide a portable terminal which enables a user to selectively mount various accessory modules each having a specific function to a body of the portable terminal, so that the portable terminal can be used for various purposes.

This object is solved by the subject matter of the independent claims.

Preferred embodiments are defined in the dependent claims.

An aspect of the present invention is to provide a portable terminal having replaceable modules which can be easily attached and detached to/from the body of the portable terminal.

Still another aspect of the present invention is to provide a portable terminal having replaceable modules so as to satisfy various consumer demands.

In order to accomplish the above, there is provided a portable terminal having replaceable accessory modules, which includes a body; a plurality of accessory modules selectively mounted on the body for providing additional functions to the portable terminal; and a locking portion which is provided to the body and each accessory module for fixing the accessory to the body.

The present invention will be more apparent from the following detailed description taken in conjunction with the accompanying drawings, in which:
FIG. 1 is an exploded perspective view showing a portable terminal according to an embodiment of the present invention;
FIG. 2 is a perspective view showing the portable terminal shown in FIG. 1, which depicts an assembled state of the portable terminal;
FIG. 3 is an exploded perspective view showing a body of the portable terminal shown in FIG. 1;
FIG. 4 is an assembled perspective view showing a portable terminal according to another embodiment of the present invention;
FIG. 5 is a perspective view showing a body of the portable terminal shown in FIG. 3;
FIG. 6 is a perspective view showing a portable terminal according to still another embodiment of the present invention; and
FIG. 7 is a plan view showing a portable terminal according to still another embodiment of the present invention.

Hereinafter, preferred embodiments of the present invention will be described with reference to the accompanying drawings. In the following description of the present invention, a detailed description of known functions and configurations incorporated herein is omitted to avoid making the subject matter of the present invention unclear.

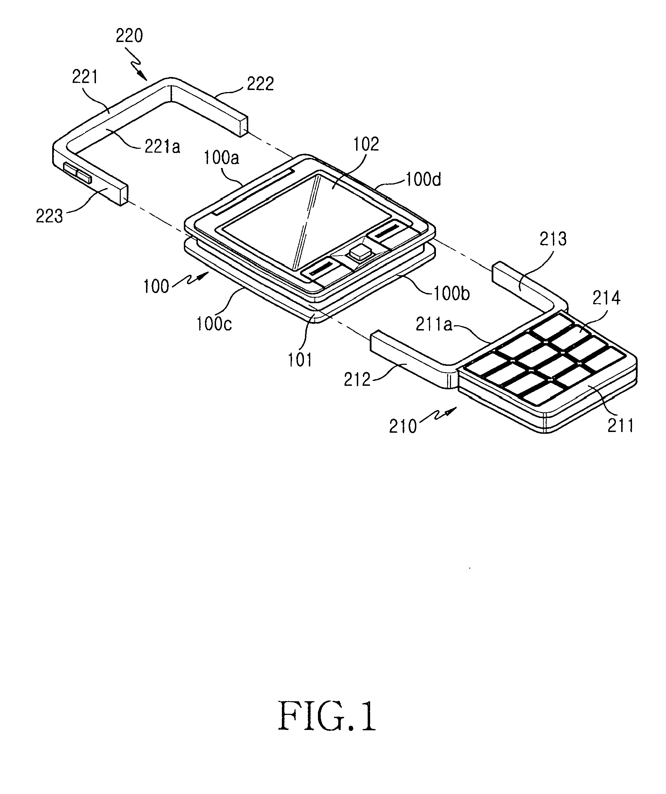

As shown in FIGS. 1 to 4 and Fig. 7, the portable terminal according to the present invention includes a body 100, a plurality of accessory modules 210, 210', 220, 230 and 240 which are selectively mounted to the body 100 in order to provide additional functions to the portable terminal, and a locking portion which is provided to the body 100 and each of the accessory modules 210, 210', 220, 230 and 240 in order to fix the accessory module 210, 210', 220, 230 and 240 to the body 100. Each of the accessory modules 210, 210', 220, 230 and 240 is mounted on a side of the body 100. Preferably, two of the accessory modules 210, 210', 220, 230 and 240 are mounted facing each other around the body 100.

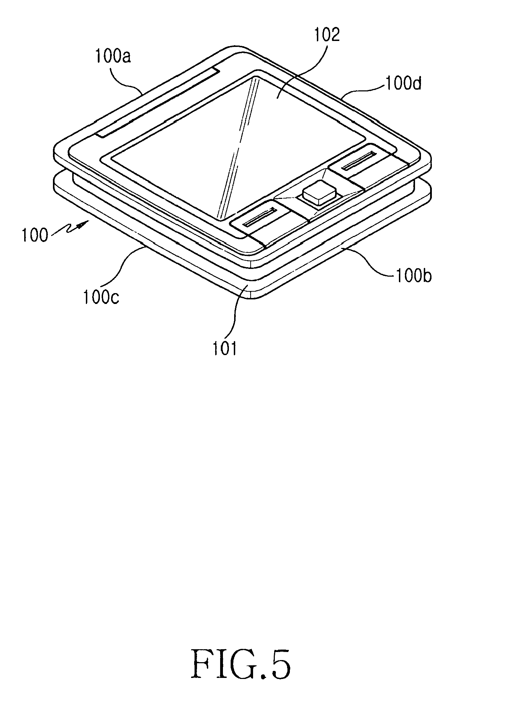

As shown in FIG. 5, the body 100 includes a display unit 102 and a battery unit (not shown). Since the body 100 has four sides 100a, 100b, 100c and 100d which preferably have the same length and shape, each accessory module 210, 210', 220, 230 and 240 can be assembled to the body 100 in any direction. Thus, a user can mount the accessory module to the body in various ways.

As shown in FIGS. 1 to 7, the accessory modules can be assembled with the body 100 in parallel with the side of the body 100 to give additional functions to the portable terminal, which includes a phone module 210 and 210', a dummy module 220, a game module 230 and 230', a camera module 240, a Bluetooth communication module (not shown) and a speaker module (not shown). The phone module 210 and 210' includes a large number of keys 214 and 214' to input characters and various numbers including dial numbers. The dummy module 220 is preferably made of urethane with an injection molding, and is mounted on a side opposite to the side of the body 100 on which one of the accessory modules is mounted. The dummy module 220 can improve feel when gripping the body 100. The game module 230 includes a game pad 234 allowing intuitive game play for a user. The camera module 240 contains a camera lens to take pictures. The Bluetooth communication module can make the portable terminal connect wirelessly with a computer or other home appliance which is located in close range so that the portable terminal and appliance or device can communicate with each other in real time. The speaker module contains a pair of speakers to provide stereo sound.

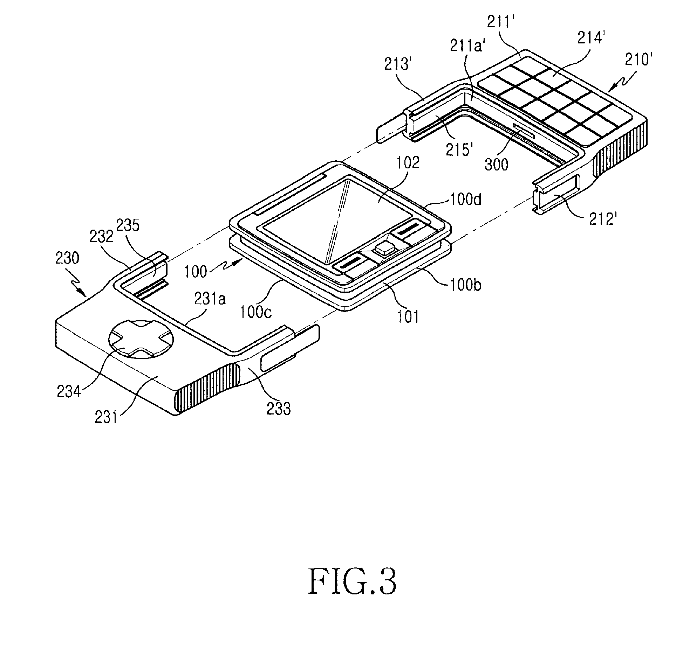

Referring to FIGS. 1 and 3, the accessory module includes a module body 211, 211', 221 and 231 and a pair of connecting rods 212, 213, 212', 213', 222, 223, 232 and 233 which extend from both ends of a side of the module body 211, 211', 221 and 231. The module body 211, 211', 221 and 231 respectively includes a plurality of keys 214 and 214', a game pad 234, a Bluetooth communication system (not shown), a pair of speakers (not shown) or a camera lens (not shown). The module body 211, 211', 221 and 231 has sides 211a, 221a, 211a' and 231a which respectively face and attach to the side of the body 100 of the portable terminal. The pair of connecting rods 212, 213, 212', 213', 222, 223, 232 and 233 have inner surfaces respectively facing opposite side of the body 100 of the portable terminal. More particularly, the module body 211, 211', 221 and 231 and the pair of connecting rods 212, 213, 212', 213', 222, 223, 232 and 233 enclose one side and half of both sides of the body 100 adjacent to the one side. The pair of connecting rods 212, 213, 212', 213', 222, 223, 232 and 233 surround half of both sides of the body 100 which are opposite to each other. Thus, two accessory modules are mounted to face each other around the body 100, resulting in surrounding all of sides of the body 100.

Referring to FIG. 1, the locking portion includes a guide channel 101 which is formed along the sides of the body 100 and the pair of the connecting rods 212, 213, 222 and 223 which are formed on each accessory module 210 and 220 in order to be fixedly inserted in the guide channel 101. Referring to FIG. 5, the guide channel 101 is regularly formed along four sides 100a, 100b, 100c and 100d, for example upper, lower, left and right sides of the body 100. Therefore, the pair of connecting rods 212, 213, 222 and 223 of the accessory module 210 and 220 are fixedly inserted in the guide channel 101 which is formed on two opposite sides of the body 100 so as to fix the accessory module 210 and 220 to the body 100.

Referring to FIG. 3, the locking portion further includes locking members 215' and 235 formed on the inner surface of the connecting rods 212', 213', 232 and 233. That is, the locking members 215' and 235 are integrally formed not only on the inner surfaces of the connecting rods 212', 213', 232 and 233 which face the both sides of the body 100, but also on a side of the module body neighboring the connecting rods, so that each accessory module can be fixed to the body 100. The locking members 215' and 235 respectively extend through the sides 211a' and 231a of the module bodies 211' and 231 from connecting rods 212' and 232 to connecting rods 213' and 233. The pair of connecting rods 212', 213', 232 and 233 have a width that is greater than the thickness of the side of the body 100 to completely cover the side of the body 100.

Meanwhile, a connector 300 is disposed at a desired portion on the body 100 and each accessory module 210, 210', 220, 230 and 240 in order that the body 100 and the accessory module 210, 210', 220, 230 and 240 transmit and receive data and signals to/from each other.

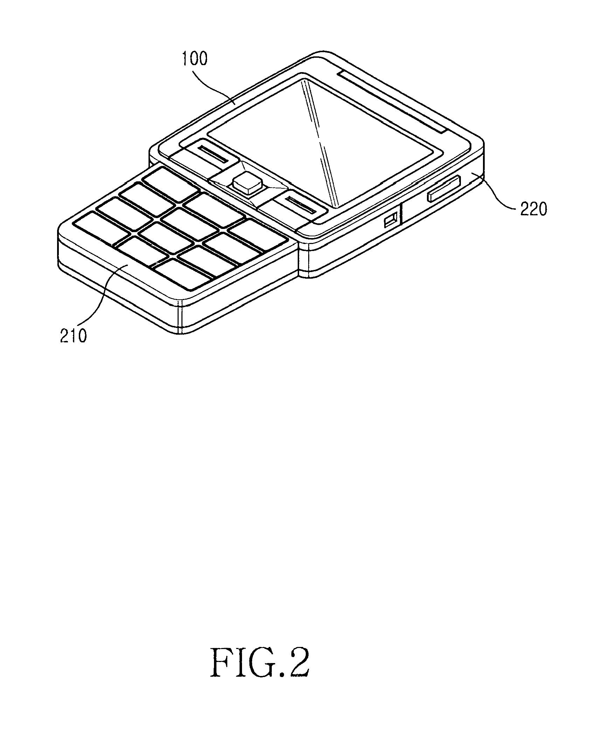

In the portable terminal according to the present invention, referring to FIGS. 1 and 2, the phone module 210 and the dummy module 220 are basically coupled to the body 100 lengthwise to perform functions of the portable terminal. The phone module 210 is mounted to the lower side 100b of the body 100 while the dummy module 220 is installed on the upper side 100a of the body 100. Then, the sides of the body 100 are enclosed by the connecting rods 212, 213, 222 and 223 which are provided to the phone module 210 and the dummy module 220.

The phone module 210 has the pair of connecting rods 212 and 213 extending upwardly from both ends of an upper side of the module body 211 which includes a plurality of keys 214. The pair of connecting rods 212 and 213 are inserted in the guide channel 101 of the body 100 so that the phone module 210 is coupled to the body 100.

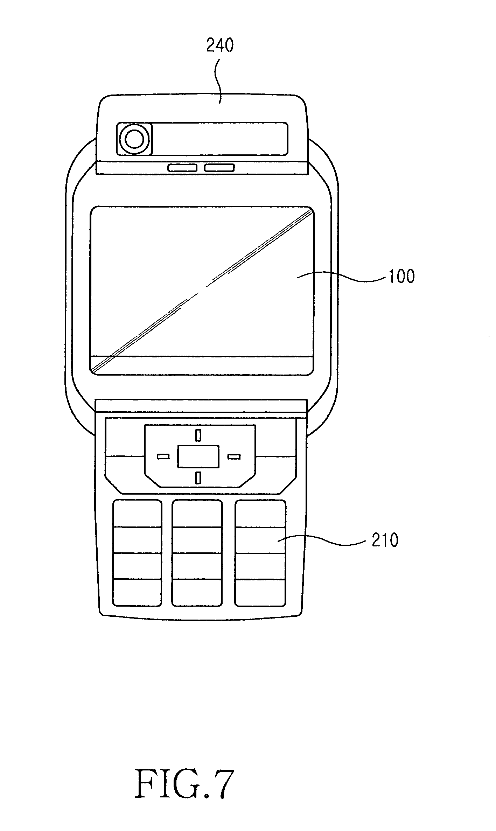

The dummy module 220 is mounted to the body 100 in order to improve the user's feel and grip and to prevent damage to the connector (not shown) even though the dummy module 220 does not provide additional functions to the portable terminal. Of course, the accessory module such as the Bluetooth communication module, the speaker module, the camera module and the like, instead of the dummy module 220, may be mounted to the portable terminal in order to provide additional functions to the portable terminal. FIG. 7 shows the camera module 240 instead of the dummy module 220 mounted to the portable terminal.

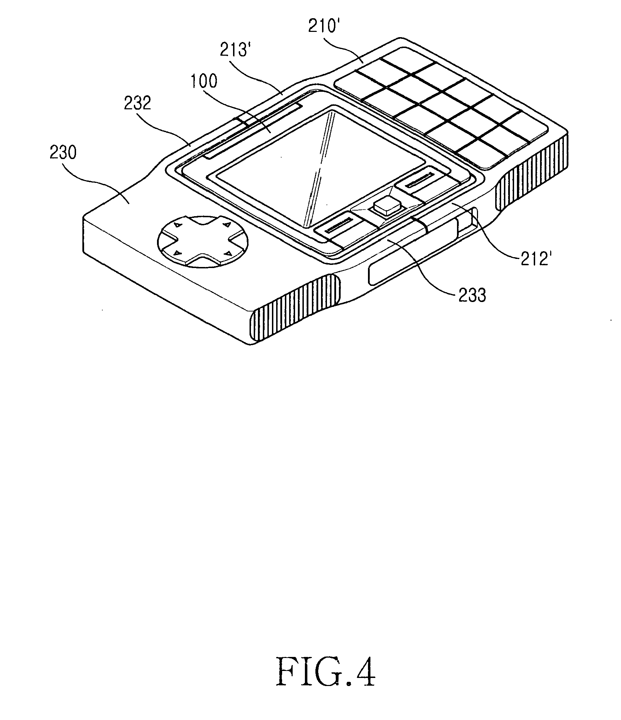

In the portable terminal according to the present invention, referring to FIGS. 3 and 4, the game module 230 and the phone module 210' are coupled to the body 100 to provide common functions of the portable terminal and game function to the portable terminal, resulting in that the user can play games conveniently. That is, the user uses the game pad 234 provided on the game module 230 to control the game more intuitively. The game module 230 maybe mounted to the left side of the body 100 while the phone module 210' is installed to the right side of the body 100.

The game module 230 has the pair of connecting rods 232 and 233 extending outwardly from both ends of the right side of the module body 231 including the game pad 234. The pair of connecting rods 232 and 233 have the locking member 235 on the inner surface thereof, while the module body 231 adjacent to the connecting rods 232 and 233 has the locking member 235 on a side thereof. The locking member 235 is fixedly inserted in the guide channel 101 of the body 100 to couple the game module 230 to the body 100.

The phone module 210' has the pair of connecting rods 212' and 213' extending outwardly from both ends of the left side of the module body 211' including a plurality of keys 214'. The pair of connecting rods 212' and 213' has the locking member 215' on the inner surface thereof. The locking member 215' is fixedly inserted in the guide channel 101 of the body 100 to couple the phone module 210' to the body 100. The game module 230 and the phone module 210' are mounted at the left and right sides of the body 100 to the portable terminal, and therefore, the user can grip the respective module with both hands to play the game conveniently.

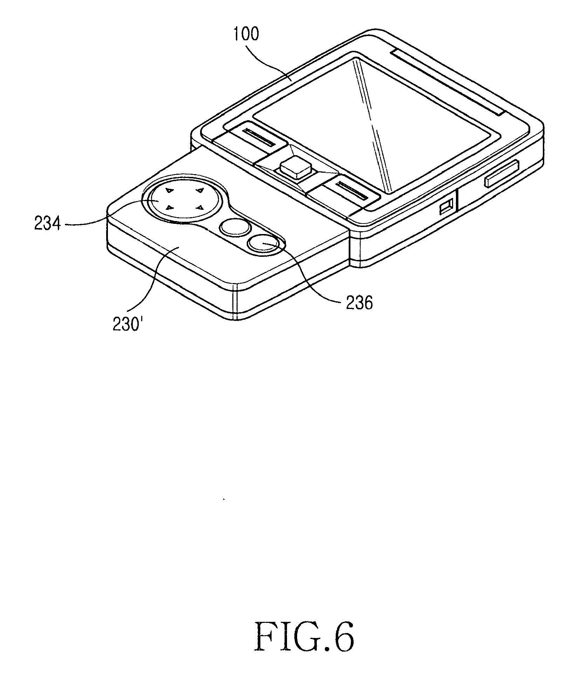

In the portable terminal according to the present invention, as shown in FIG. 6, the game module 230' having the game pad 234 and various operation keys 236 can be mounted to the body 100, as well as a Bluetooth communication module which may be mounted to the body 100 to use it as a wireless controller of a console game player (not shown).

While the invention has been shown and described with reference to certain preferred embodiments thereof, it will be understood by those skilled in the art that various changes in form and details may be made therein without departing from the scope of the invention as defined by the appended claims.

## Claims

1. A portable terminal having replaceable accessory modules, the portable terminal comprising:
a body;
a plurality of accessory modules selectively mounted on the body, for providing additional functions to the portable terminal; and
a locking portion provided on the body and each of the accessory modules, for fixing the accessory module to the body.

2. The portable terminal as claimed in claim 1, wherein the locking portion includes a guide channel which is formed along sides of the body, and a pair of connecting rods which extend from both sides of the accessory module outwardly and which are fixedly inserted into the guide channel formed on opposite sides of the body.

3. The portable terminal as claimed in claim 1, wherein the locking portion includes a guide channel which is formed along sides of the body, a pair of connecting rods which extends from both sides of the accessory module outwardly and which have an inner surface facing the opposite side of the body, and locking members which are formed on an inner surface of each connecting rod to be fixedly inserted in the guide channel of the body.

4. The portable terminal as claimed in claim 2, wherein the respective accessory module encloses one side and half of two sides of the body of the portable terminal adjacent to the one side by means of the module body and the pair of connecting rods thereof.

5. The portable terminal as claimed in claim 1, wherein two accessory modules are provided to the portable terminal, which are respectively mounted on opposite sides of the body to face each other around the body.

6. The portable terminal as claimed in claim 5, wherein the two accessory modules are respectively mounted on upper and lower sides of the body.

7. The portable terminal as claimed in claim 5, wherein the accessory modules are respectively mounted on right and left sides of the body.

8. The portable terminal as claimed in claim 1, wherein the accessory module is at least one of a communication module containing a Bluetooth communication function, a game module having a game pad, a camera module, a dummy module, a phone module and a speaker module.

9. The portable terminal as claimed in one of claims 1 to 8, wherein a phone module having a plurality of keys is mounted on one side of the body, and at least one of a communication module containing a Bluetooth communication function, a game module having a game pad, a camera module, a dummy module, and a speaker module is disposed on another side opposite to the one side of the body.

10. The portable terminal as claimed in one of claims 1 to 9, wherein the body has the same shape and length on all sides thereof so that a respective accessory module can be attached to the body in any direction.

11. The portable terminal as claimed in claim 1, wherein the plurality of accessory modules can be mounted to the body in a transverse or vertical direction.

12. The portable terminal as claimed in claim 1, wherein the plurality accessory modules are mounted parallel to the body.
